**Europäisches Patentamt**

**European Patent Office**

**Office européen des brevets**

(19)

(11) Veröffentlichungsnummer : **0 137 471**
**B1**

(12)

# EUROPÄISCHE PATENTSCHRIFT

(45) Veröffentlichungstag der Patentschrift :
30.12.86

(51) Int. Cl.⁴ : **B 65 G 17/20**

(21) Anmeldenummer : **84111978.7**

(22) Anmeldetag : **05.10.84**

(54) **Stauketten-Fördereinrichtung für hängende Stückgüter.**

(30) Priorität : 05.10.83 DE 3336190

(43) Veröffentlichungstag der Anmeldung :
**17.04.85 Patentblatt 85/16**

(45) Bekanntmachung des Hinweises auf die Patenterteilung : 30.12.86 **Patentblatt 86/52**

(84) Benannte Vertragsstaaten :
**AT BE CH DE FR GB IT LI LU NL SE**

(56) Entgegenhaltungen :
DE-A- 2 822 196
GB-A- 1 337 128

(73) Patentinhaber : **Fraunhofer-Gesellschaft zur Förde-**
**rung der angewandten Forschung e.V.**
**Leonrodstrasse 54**
**D-8000 München 19 (DE)**

(72) Erfinder : **Wetzel, E., Dipl.-Ing.**
**Sauerbruch 1**
**D-5820 Gevelsberg (DE)**

(74) Vertreter : **Kraus, Walter, Dr. et al**
**Patentanwälte Kraus, Weisert & Partner Thomas-**
**Wimmer-Ring 15**
**D-8000 München 22 (DE)**

**Beschreibung**

Die Erfindung betrifft eine Stauketten-Fördereinrichtung für hängende Stückgüter, mit einer Laufbahn von kreuzförmigem Querschnitt mit oben und unten offenem Mittelteil, die durch zwei Träger von hutförmigem, nach innen zu offenem Querschnitt gebildet wird, die mit Abstand einander gegenüberstehen und obere und untere liegende Laufbahnflächen für Waagrechtführungselemente und stehende seitliche Laufbahnflächen für Senkrechtführungselemente von Gelenkstücken einer darin angeordneten Kreuzgelenkkette aufweisen, wobei diese Gelenkstücke paarweise durch das oben offene Laufbahnmittelteil reichende Tragstücke je eine Tragplatte abstützen, die als Auflage für C-förmige Gehänge dient, und wobei diese Gelenkstücke durch in zueinander rechtwinkligen Ebenen bewegliche Glieder verbunden sind, und ferner mit einer an der Laufbahn außen angebrachten Abheb- und Puffervorrichtung für jene Gehänge.

Eine derartige Fördereinrichtung gehört zum Stand der Technik.

Die Förderung von Gehängen für Stückgüter geschieht in einfachster Weise durch sogenannte Kreiskettenförderer, bei denen auf einer Laufbahn, zum Beispiel aus I-Profilträgern, Laufwerke abrollbar angeordnet sind. Unterhalb von jedem Laufwerk ist ein einfaches Gehänge für das Stückgut angebracht.

Eine solche Einrichtung ist zwar hinsichtlich ihrer Herstellung, ihrem Einbau und ihrer Wartung billig, und sie kann als sogenannter Umlaufspeicher verwendet werden. Sie ist jedoch insbesondere insofern nachteilig, als die Stückgüter am Zielort sofort entnommen werden müssen und als dort gegebenenfalls gewartet werden muß, bis ein Gehänge für eine bestimmte Adresse eintrifft.

Verzweigungen oder Zusammenführungen von Stückgut-Strömen an Förderketten werden mit sogenannten Umsetzrädern durchgeführt ; ein solches ist zwischen Ketten horizontal angebracht ; es kann ein Gehänge aus dem Haken der einen Kette ausheben und zum Beispiel nach einer gewissen Drehung in einen Haken der anderen Kette einheben. Vor einem Zielort und im Verzweigungspunkt kann also keine Stückgut-Pufferung erreicht werden, die einen beliebigen Zugriff oder auch eine bestimmte Vorfahrtsregelung bei Zusammenführungen gestattet.

Bei solchen höheren Anforderungen an den Stückgutfluß werden sogenannte Power-andfree-Förderer verwendet. Dabei ist unter einer vorstehend beschriebenen Laufbahn, der sogenannten Power-Bahn, eine sogenannte Free-Bahn samt Free-Wägen mit Gehängen für das Stückgut angebracht, die durch besondere Einrichtungen von der ständig laufenden Steckkette der Power-Bahn abgekoppelt werden können. Diese Wägen können also vor Zielorten gepuffert und über Weichen und Kreuzungen anderen Kettensträngen zugeführt werden. Eine solche Einrichtung ist jedoch recht aufwendig.

Schließlich ist eine Fördereinrichtung bekannt geworden, bei der C-förmige Gehänge für das Stückgut oben einen Querstab tragen, der von einer üblichen Förderkette mit unteren Haken abgehoben werden kann. Die Gehänge werden dann mit einem unterhalb von dem Querstab angebrachten Längsstab auf eine daneben oder darunter laufende Laschenkette gesetzt, wo sie durch Anstoßen an einen Anschlag und aneinander gepuffert werden können. Auch eine solche Einrichtung ist aufwendig.

Aufgabe der Erfindung ist es insbesondere, eine bezüglich ihrer Herstellung, ihrem Einbau und ihrer Wartung einfache und durchaus betriebssichere Fördereinrichtung mit Abgeb- und Puffermöglichkeit zu schaffen.

Diese Aufgabe wird einerseits dadurch gelöst, daß die Tragplatten so abgelängt sind, daß ihre Enden mit geringem Abstand aneinander anstoßen, so daß ein beinahe geschlossenes Tragband gebildet wird, und andererseits dadurch, daß die Abheb- und Puffervorrichtung für die C-förmigen Gehänge vorzugsweise durch die laufende Kette, aber auch durch Fremdenergie betätigbar ist.

Hierbei können die Tragplatten so ausgebildet sein, daß die Enden der Tragplatten auf halbe Breite wechselseitig ausgespart sind, so daß die Platten gestaffelt aneinanderstoßen. Bei dieser Art der Ausbildung der Tragplatten ist es besonders zu bevorzugen, daß die nicht ausgesparten, also stehengebliebenen Endteile der Tragplatten oben schräg nach außen weisende Abflachungen tragen bzw. aufweisen.

Weiter kann die Ausbildung so sein, daß die Tragplatten Querrillen aufweisen, in welche die C-förmigen Gehänge von oben her eingreifen. In diesem Falle ist es zu bevorzugen, daß die Enden der Tragplatten bis zur tiefsten Stelle der letzten Querrillen auf halbe Breite wechselseitig ausgespart sind.

Die vorstehend erfindungsgemäß vorgeschlagenen verschiedenen Tragplatten ergeben ein praktisch geschlossenes Tragband, das das Auflegen der Gehänge an jeder Stelle zuläßt. Aufgrund der besonders geformten Tragplatten-Oberfläche ist die Fördereinrichtung auch für Steigungen und Gefälle verwendbar ; durch besondere Ausbildung der Tragplatten-Enden wird erreicht, daß die Kette sowohl Vertikal- wie Horizontalbögen der Laufbahn ohne Schwierigkeit durchfahren kann.

Eine besonders vorteilhafte Ausgestaltung der Abheb- und Puffervorrichtung, die in Verbindung mit den angegebenen Tragplatten vorgesehen sein kann, zeichnet sich dadurch aus, daß die Abheb- und Puffervorrichtung an wenigstens einer Außenwand der Laufbahn eine schräg nach oben weisende Auflauffläche für die C-förmigen Gehänge aufweist. Hierbei ist es besonders zu bevorzugen, die Ausbildung so durchzuführen, daß die schräge Auflauffläche abwärts bewegbar ist, um das Abgeben des C-förmigen Gehänges an die Tragplatten zu ermöglichen. Insbesondere kann die Bewegung der schrägen Auflauffläche durch ein Schloß steuerbar sein.

Eine bevorzugte Ausbildung einer Abheb- und Puffervorrichtung, bei der auch Fremdenergie verwendet wird, zeichnet sich dadurch aus, daß die Abheb- und Puffervorrichtung für die C-förmigen Gehänge eine nach oben wirkende Feder aufweist.

Eine andere bevorzugte Ausbildung einer Abheb- und Puffervorrichtung, die ebenfalls Fremdenergie anwendet, besteht darin, daß die durch Fremdenergie betätigbare Abheb- und Puffervorrichtung für die C-förmigen Gehänge von hydraulischer Art, zum Beispiel mittels einer Zylinder-Kolben-Vorrichtung, oder auch elektrischer Art ist.

Unabhängig von der Art der Betätigungsvorrichtung der Abheb- und Puffervorrichtung ist die Steuerung dieser Betätigungsvorrichtungen entweder von außen her oder durch eine selbsttätige Folgesteuerung möglich.

Mehrere solche Abheb- und Puffervorrichtungen bilden zusammen einen stehenden Speicher, in den die einzelnen Gehänge einlaufen und im Abstand in jener Vorrichtung gestaut werden.

Die erfindungsgemäße Fördereinrichtung ermöglicht einen Stückgutfluß wie ein Power-andfree-Förderer, ist aber wesentlich einfacher aufgebaut ; zum Beispiel können Gehänge aus einem gewöhnlichen Kreiskettenförderer ohne besondere Synchronisierung auf eine Staukettenfördereinrichtung übergeben werden. Dann laufen jene in einen Puffer ein, der sich vor dem Zielort oder vor einer Zusammenführung mit einem weiteren Kreiskettenförderer befindet. Ein solcher Puffer besteht aus einer vorher berechneten Anzahl von einzelnen Puffervorrichtungen. Durch entsprechende Steuerung lassen sich diese so verknüpfen, daß die Gehänge in gewünschter Weise nacheinander gepuffert werden.

Es können sogenannte hängende Speicher gebildet werden, in denen sich die Staukette schlängelt ; dabei kann in den Kurven der Pufferabstand geändert, nämlich vergrößert werden, so daß ein Zusammenstoßen der Stückgüter vermieden wird ; der für die Kurven erforderliche Mindestabstand braucht also auf der Geraden nicht beibehalten zu werden, wodurch die Gesamtlänge der Fördereinrichtung vermindert wird.

Die Erfindung wird anhand einiger Ausführungsbeispiele erläutert ; es zeigen :

Figur 1 eine perspektivische Ansicht einer Ausführungsform der Einrichtung nach der Erfindung ohne Abheb- und Puffervorrichtung ;

Figur 2 eine Draufsicht auf eine Tragplatte ;

Figur 2a eine Schrägansicht A-A gemäß Figur 2 ;

Figur 3 eine Seitenansicht und

Figur 4 eine Queransicht in Richtung B gemäß Figur 3 ;

Figur 5a eine Abhebvorrichtung mittels Auflaufen auf eine schräge Fläche ;

Figur 5b eine mit Hilfe eines Federspeichers arbeitende Abhebvorrichtung und

Figur 5c eine mit Hilfe von hydraulischer Fremdenergie betriebene Abhebvorrichtung ;

Figur 6 eine Abheb- und Puffervorrichtung einer erfindungsgemäßen Einrichtungen in Seitenansicht ; und

Figur 7 einen Querschnitt durch die Abheb- und Puffervorrichtung der Figur 6.

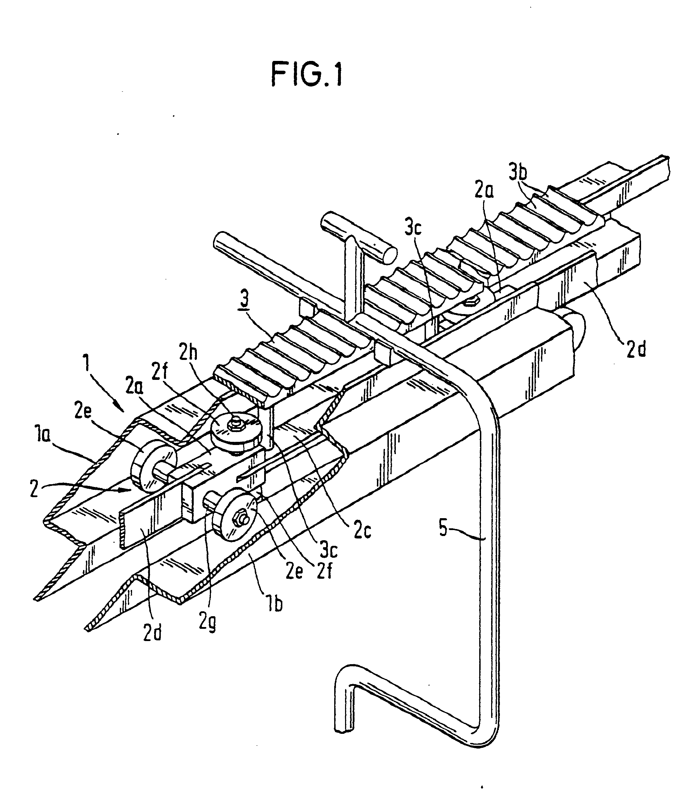

Die in Figur 1 gezeigte Ausführungsform einer Stauketten-Fördereinrichtung weist eine Laufbahn 1 von kreuzförmigem Querschnitt mit oben und unten offenem Mittelteil auf ; sie wird durch zwei Träger 1a und 1b von hutförmigem, nach innen zu offenem Querschnitt gebildet, die im Abstand einander gegenüberstehen. Eine darin angeordnete Kreuzgelenkkette 2 enthält Gelenkstücke 2a, die durch eine liegende Lasche 2c über stehende Achsen 2h gegeneinander verdrehbar verbunden sind. Benachbarte Gelenkstücke sind ferner durch stehende Laschen 2d über liegende Achsen 2g gegeneinander verdrehbar verbunden.

An den liegenden Achsen 2g ist an jeder Seite außen eine Rolle 2e angebracht, die an oben und unten liegenden Flächen der Laufbahn abrollen. An den stehenden Achsen 2h ist oben und unten eine vorzugsweise mit jenen Rollen übereinstimmende Rolle 2f angebracht, die an seitlichen stehenden Flächen der Laufbahn abrollt.

An jedem Gelenkstück 2a ist ein Tragstück 3c angebracht, das durch das oben offene Laufbahn-Mittelstück reicht ; die beiden Tragstücke benachbarter Gelenkstücke sind mit einer gemeinsamen Tragplatte 3 verbunden, die Querrillen 3b aufweist, in die waagrechte Endteile von C-förmigen Gehängen 5 für Stückgüter von oben her aufgelegt werden können.

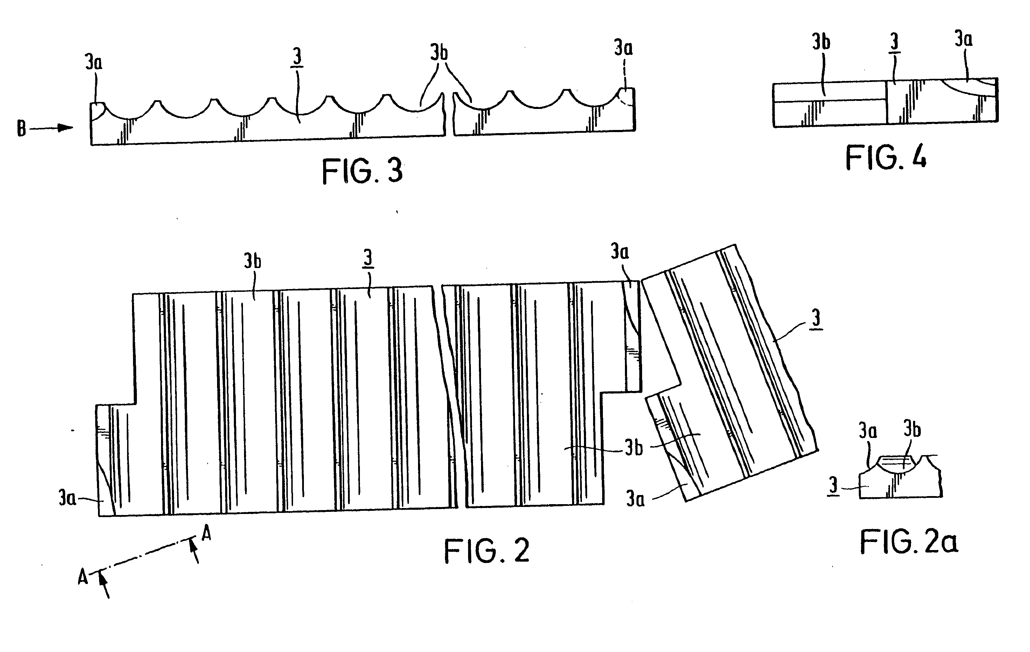

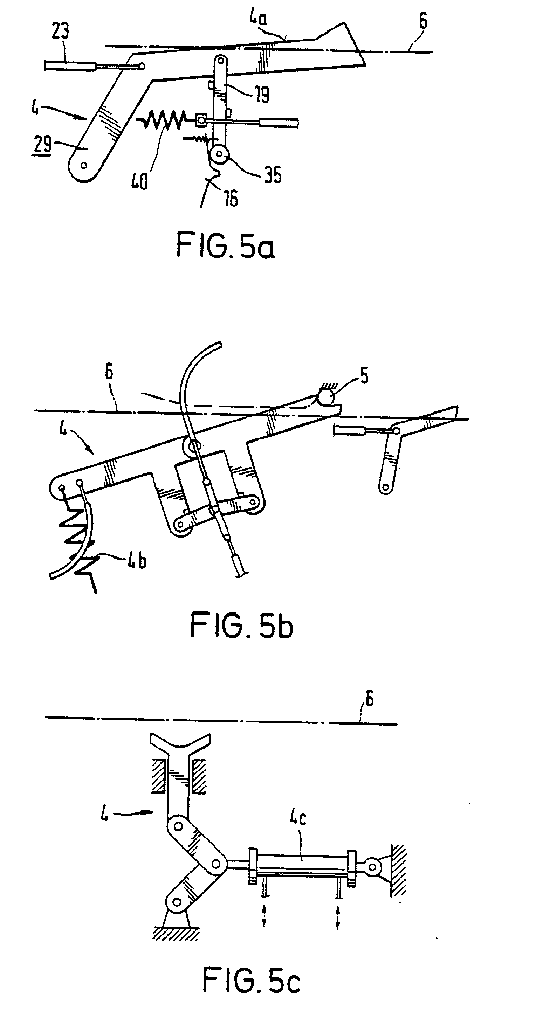

Die Enden der Tragplatten 3 sind gemäß Figur 2 und 4 auf halbe Breite bis zur tiefsten Stelle der letzten Querrille 3b wechselseitig ausgespart, so daß die Platten gestaffelt aneinander anstoßen und ein geschlossenes Tragband bilden. Die nicht ausgesparten, also stehengebliebenen Endteile der Tragplatten haben oben schräg nach außen weisende Ausbuchtungen 3a, welche deren Kurvenbewegung erleichtern bzw. überhaupt erst gestatten.

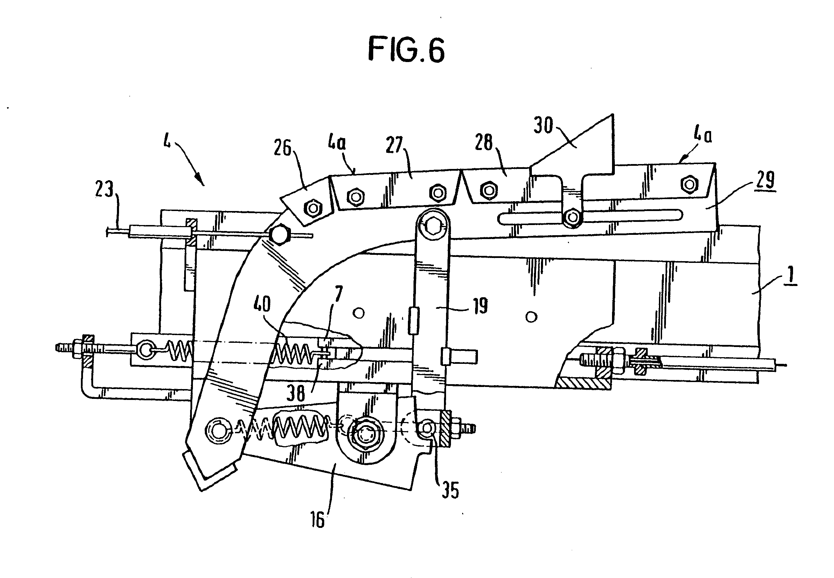

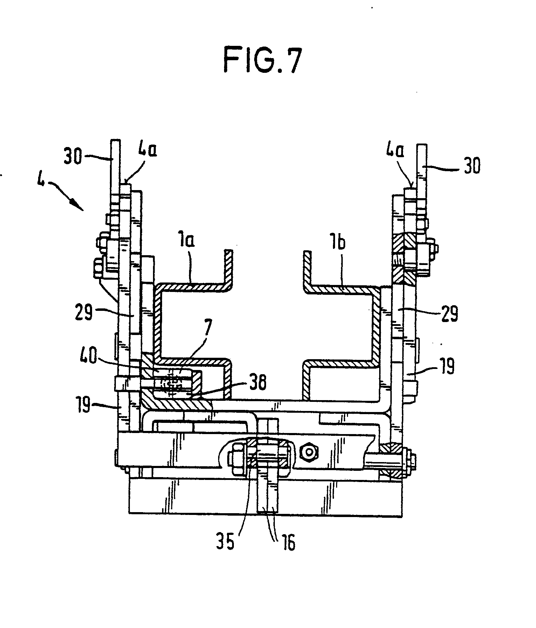

Bei der Abheb- und Puffervorrichtung 4 für die Gehänge 5 nach Figur 5 ist an jeder Außenwand der Laufbahn 1 eine schräg nach oben weisende Auflauffläche 4a an einem Schwenkarm 29 angebracht, an den ein Stützhebel 19 angelenkt ist ; jeder wird nach Figur 6 und 7 mittels eines Bowdenzugs 23 über ein Schloß 38 der nachfolgenden Abheb- und Puffervorrichtung durch eine Feder 40 in seiner obersten Lage gehalten. Ein unten liegendes Stützlager 35 dieses Stützhebels steht auf dem Nocken einer Kurvenscheibe 16, die unterhalb der Laufbahn angebracht ist. Die Auflauffäche wird durch aneinandergereihte Verschleißleisten 26, 27 und 28 gebildet. Neben dem Schwenkarm ist, über die letzte Verschleißleiste 28 nach oben vorstehend, an der Laufbahn 1 ein Nocken 30 angebracht.

Die Wirkungsweise ist folgende : Durch Auflaufen eines auf einer Tragplatte 3 liegenden C-förmigen Gehänges 5 in Höhe der Strich-Punkt-Linie 6 auf die erste Verschleißleiste 26 dreht sich der Schwenkarm 29 gegen die Kraft der Feder 40. Beim Weiterlaufen der Tragplatte wird das Gehänge auf die zweite Verschleißleiste 27 aufgeschoben, wodurch es aus der Rille 3b ausgehoben wird. In dieser Lage ist das Gehänge gepuffert. Wird nun der Stützhebel 19 durch das Schloß 38 nach vorn bewegt, so rollt das Stützlager 35 über den Nocken der Kurvenscheibe 16. Das Gewicht des Gehänges drückt nun den Schwenkarm herunter, so daß jenes sich in eine Querrille 3b einhängt. Daraufhin bewegt sich das Gehänge über die dritte Verschleißleiste 28 fort ; sobald es den Nocken 30 erreicht hat, führt der Schwenkarm wiederum eine Drehbewegung durch, die über den Bowdenzug 23 das Schloß 38 der nächsten Abheb- und Puffervorrichtung bewegt. Dieses Schloß schaltet jene Vorrichtung auf « Abgeben ». Beim Überfahren des Nockens 30 gelangt das Stützlager 35 unter den Nocken der Kurvenscheibe 16. In dieser Vorbeifahrstellung verharrt die Vorrichtung so lange, bis ein Gehänge bei der vorherigen Vorrichtung gegen die Verschleißleiste 26 fährt und durch Drehung des Schwenkarms bei dieser Vorrichtung die Vorbeifahrstellung entriegelt, so daß der Schwenkarm aufgrund der Spannung der Feder 40 der nachfolgenden Vorrichtung in die aufnahmebereite Ausgangsstellung zurückschnellt.

Bei der Abheb- und Puffervorrichtung 4 nach Figur 5b ist eine nach oben wirkende Feder 4b angebracht.

Bei der Abheb- und Puffervorrichtung 4 nach Figur 5c wird Fremdenergie verwendet, und zwar mittels einer hydraulischen Zylinder-Kolben-Vorrichtung 4c, die auch eine pneumatische Zylinder-Kolben-Vorrichtung sein kann.

**Patentansprüche**

1. Stauketten-Fördereinrichtung für hängende Stückgüter, mit einer Laufbahn (1) von kreuzförmigem Querschnitt mit oben und unten offenem Mittelteil, die durch zwei Träger (1a, 1b) von hutförmigem, nach innen zu offenem Querschnitt gebildet wird, die mit Abstand einander gegenübersehen und obere und untere liegende Laufbahnflächen für Waagrechtführungselemente und stehende seitliche Laufbahnflächen für Senkrechtführungselemente von Gelenkstücken (2a) einer darin angeordneten Kreuzgelenkkette (2) aufweisen, wobei diese Gelenkstücke (2a) paarweise durch das oben offene Laufbahnmittelteil reichende Tragstücke (3c) je eine Tragplatte (3) abstützen, die als Auflage für C-förmige Gehänge (5) dient, und wobei ferner diese Gelenkstücke (2a) durch in zueinander rechtwinkligen Ebenen bewegliche Glieder (2c, 2d) verbunden sind, und ferner mit einer an der Laufbahn (1) außen angebrachten Abheb- und Puffervorrichtung (4) für jene Gehänge (5) dadurch gekennzeichnet, daß die Tragplatten (3) so abgelängt sind, daß ihre Enden mit geringem Abstand aneinander anstoßen, so daß ein beinahe geschlossenes Tragband gebildet wird, und daß die Abheb- und Puffervorrichtung (4) für die C-förmigen Gehänge (5) vorzugsweise durch die laufende Kette (2), aber auch durch Fremdenergie betätigbar ist.

2. Einrichtung nach Anspruch 1, dadurch gekennzeichnet, daß die Enden der Tragplatten (3) auf halbe Breite wechselseitig ausgespart sind, so daß die Platten gestaffelt aneinander anstoßen.

3. Einrichtung nach Anspruch 2, dadurch gekennzeichnet, daß die nicht ausgesparten, also stehengebliebenen Endteile der Tragplatten (3) oben schräg nach außen weisende Abflachungen (3a) tragen.

4. Einrichtung nach einem der Ansprüche 1 bis 3, dadurch gekennzeichnet, daß die Tragplatten (3) Querrillen (3b) aufweisen, in welche die C-förmigen Gehänge (5) von oben her eingreifen.

5. Einrichtung nach Anspruch 4, dadurch gekennzeichnet, daß die Enden der Tragplatten (3) bis zur tiefsten Stelle der letzten Querrillen (3b) auf halbe Breite wechselseitig ausgespart sind.

6. Einrichtung nach einem der Ansprüche 1 bis 5, dadurch gekennzeichnet, daß die Abheb- und Puffervorrichtung (4) an wenigstens einer Außenwand der Laufbahn (1) eine schräg nach oben weisende Auflauffläche (4a) für die C-förmigen Gehänge (5) aufweist.

7. Einrichtung nach Anspruch 6, dadurch gekennzeichnet, daß die schräge Auflauffläche (4a) abwärts bewegbar ist, um das Abgeben des C-förmigen Gehänges (5) an die Tragplatten (3) zu ermöglichen.

8. Einrichtung nach Anspruch 7, dadurch gekennzeichnet, daß die Bewegung der schrägen Auflauffläche (4a) durch ein Schloß (7) steuerbar ist.

9. Einrichtung nach einem der Ansprüche 1 bis 8, dadurch gekennzeichnet, daß die Abheb- und Puffervorrichtung (4) für die C-förmigen Gehänge (5) eine nach oben wirkende Feder (4b) aufweist.

10. Einrichtung nach einem der Ansprüche 1 bis 8, dadurch gekennzeichnet, daß die durch Fremdenergie betätigbare Abheb- und Puffervorrichtung (4) für die C-förmigen Gehänge (5) von hydraulischer Art, zum Beispiel mittels einer Zylinder-Kolben-Vorrichtung (4c), oder auch elektrischer Art ist.

**Claims**

1. A retaining chain conveyor for suspended parcelled goods comprising a track (1) of cruciform cross-section with a central section open on top and underneath which is formed by two beams (1a, 1b) of hat-like, inwardly open cross-section which face one another at a distance and comprise upper and lower track surfaces for horizontal guide elements and fixed lateral track surfaces for vertical guide elements of links (2a) of a transversely jointed chain (2) arranged therein, these links (2a) each being supported by a supporting plate (3) acting as a support for C-shaped suspension attachments (5) via support elements (3c) extending in pairs through the upwardly open central section of the track and said links further being connected by elements (2c, 2d) moveable in planes at a right-angle to one another, and further comprising a lifting and buffer unit (4) for the suspension attachments (5) arranged externally on the track (1), characterized in that the supporting plates (3) are cut to length so that their ends abut one another with a slight gap, forming a substantially continuous supporting belt, and in that the lifting and buffer unit (4) for the C-form suspension attachments (5) is operable preferably by the moving chain (2), but also by outside energy.

2. A conveyor as claimed in Claim 1, characterized in that the ends of the supporting plates (3) are alternately recessed to half their width so that the plates abut one another in a staggered arrangement.

3. A conveyor as claimed in Claim 2, characterized in that the non-recessed, i. e. intact, end portions of the supporting plates (3) are flattened off obliquely outwards on top at (3a).

4. A conveyor as claimed in any of Claims 1 to 3, characterized in that the supporting plates (3) comprise transverse grooves (3b) in which the C-form suspension attachments (5) engage from above.

5. A conveyor as claimed in Claim 4, characterized in that the ends of the supporting plates (3) are alternately recessed to half their width up to the deepest point of the last transverse grooves (3b).

6. A conveyor as claimed in any of Claims 1 to 5, characterized in that, on at least one outer wall of the track (1), the lifting and buffer unit (4) comprises a run-on surface (4a) facing obliquely upwards for the C-form suspension attachments (5).

7. A conveyor as claimed in Claim 6, characterized in that the oblique run-on surface (4a) is displaceable down-wards to enable the C-form suspension attachment (5) to be transferred to the supporting plates (3).

8. A conveyor as claimed in Claim 7, characterized in that the movement of the oblique run-on surface (4a) is controllable by a lock (7).

9. A conveyor as claimed in any of Claims 1 to 8, characterized in that the lifting and buffer unit (4) for the C-form suspension attachments (5) comprises an upwardly acting spring (4b).

10. A conveyor as claimed in any of Claims 1 to 8, characterized in that the lifting and buffer unit (4) operable by outside energy for the C-form suspension attachment (5) is hydraulically powered, for example by means of a cylinder-and-piston assembly (4c), or even electrically powered.

**Revendications**

1. Convoyeur d'accumulation à chaîne pour des colis suspendus, comportant un chemin de roulement (1) de section droite en croix avec une partie centrale ouverte supérieurement et inférieurement, formé par deux longerons (1a, 1b) de section droite en U renversé ouverte vers l'intérieur, qui sont séparés l'un de l'autre et en regard et comportent des surfaces de roulement supérieures et inférieures horizontales pour des éléments de guidage horizontaux et des surfaces de roulement latérales verticales pour des éléments de guidage verticaux d'éléments articulés (2a) d'une chaîne à articulations croisées (2), ces éléments articulés (2a) supportant deux à deux, par des éléments de support (3c) allant jusqu'à la partie centrale ouverte vers le haut du chemin de roulement, une plaque de support (3) constituant un appui pour des éléments de suspension en C (5), et ces éléments articulés (2a) étant, en outre, reliés par des organes (2c, 2d) mobiles dans des plans mutuellement orthogonaux, ainsi qu'un dispositif de soulèvement et d'amortissement (4) rattaché à cet élément de suspension (5), placé extérieurement sur le chemin de roulement (1), caractérisé en ce que les plaques de support (3) sont d'une longueur telle que leurs extrémités contiguës sont à une faible distance, de sorte qu'une bande de support presque fermée est formée, et en ce que le dispositif de soulèvement et d'amortissement (4), destiné aux éléments de suspension en C (5), peut être actionné, de préférence, par la chaîne mobile (2), mais aussi par une source d'énergie extérieure.

2. Convoyeur selon la revendication 1, caractérisé en ce que les extrémités des plaques de support (3) sont évidées alternativement sur la moitié de la largeur, de sorte que la ligne d'aboutement des plaques forme des échelons.

3. Convoyeur selon la revendication 2, caractérisé en ce que les parties terminales non évidées, donc restées en place, des plaques de support (3) comportent supérieurement des écornures (3a) dirigées obliquement vers l'extérieur.

4. Convoyeur selon l'une des revendications 1 à 3, caractérisé en ce que les plaques de support (3) comportent des sillons transversaux (3b) dans lesquels les éléments de suspension en C (5) s'engagent par en haut.

5. Convoyeur selon la revendication 4, caractérisé en ce que les extrémités des plaques de support (3) sont évidées alternativement sur la moitié de la largeur jusqu'au point le plus profond des derniers sillons transversaux (3b).

6. Convoyeur selon l'une des revendications 1 à 5, caractérisé en ce que le dispositif de soulèvement et d'amortissement (4) comporte sur au moins une paroi latérale du chemin de roulement (1) une surface de montée (4a) dirigée obliquement vers le haut pour l'élément de suspension en C (5).

7. Convoyeur selon la revendication 6, caractérisé en ce que la surface de montée inclinée (4a) peut descendre, pour permettre de faire passer l'élément de suspension en C (5) sur les plaques de support (3).

8. Convoyeur selon la revendication 7, caractérisé en ce que le mouvement de la surface de montée inclinée (4a) peut être commandé par un maillon de raccord (7).

9. Convoyeur selon l'une des revendications 1 à 8, caractérisé en ce que le dispositif de soulèvement et d'amortissement (4) comporte, pour les éléments de suspension en C (5), un ressort (4b) agissant vers le haut.

10. Convoyeur selon l'une des revendications 1 à 8, caractérisé en ce que le dispositif de soulèvement et d'amortissement (4) pour les éléments de suspension en C (5) pouvant être actionné par une source d'énergie extérieure, est de type hydraulique, par exemple utilisant un dispositif à piston et cylindre (4c), ou bien de type électrique.

# FIG.1

FIG. 3

FIG. 4

FIG. 2

FIG. 2a

0 137 471

0 137 471

FIG. 5a

FIG. 5b

FIG. 5c

3

# FIG.6

0 137 471

# FIG.7